# EUROPEAN PATENT APPLICATION

(11) **EP 4 691 744 A1**
(43) Date of publication of application: **11.02.2026**
(21) Application number: 24777622.2
(22) Date of filing: 01.03.2024
(51) Int. Cl.: B29D 7/00, E04F 15/10, E04F 15/02

(54) **3D WOOD TEXTURED STONE-PLASTIC FLOOR AND PREPARATION METHOD THEREFOR**

(30) Priority: 31.03.2023 CN 202310337403
(71) Applicant: Hangzhou Print Flooring Technology Co., Ltd., Hangzhou, Zhejiang 311200 (CN)
(72) Inventor: YANG, Guocui, Hangzhou, Zhejiang 311200 (CN); LEI, Zhongshan, Hangzhou, Zhejiang 311200 (CN); DENG, Mengde, Hangzhou, Zhejiang 311200 (CN); HUANG, Donghui, Hangzhou, Zhejiang 311200 (CN); AO, Fangbing, Hangzhou, Zhejiang 311200 (CN); HUANG, Feng, Hangzhou, Zhejiang 311200 (CN)
(74) Representative: Garavelli, Paolo
(86) International application number: PCT/CN2024/079571
(87) International publication number: WO 2024/198832

(57) **Abstract**

The present invention pertains to the technical field of wood flooring manufacturing, specifically relating to a stone-plastic composite (SPC) flooring with 3D wood grain texture and a method for preparing the same. The invention enhances the surface roughness of the base color layer by imparting irregularly distributed pores on the surface of the base color layer above the SPC substrate. Simultaneously, the paint of the three-dimensional wood grain layer above the base color layer penetrates into and downward through these pores, thereby enhancing the adhesion between the SPC substrate layer and the three-dimensional wood grain layer above it, resulting in more stable bonding. By subjecting the surface of the base color layer to high-energy beam stimulation treatment, its surface roughness is increased. Additionally, the surface molecules of the base color layer are oxidized, generating polar groups with strong polarity, which increases its surface energy and facilitates bonding with the paint of the printed three-dimensional wood grain layer, effectively improving the wettability and adhesion of the base color layer surface. This further effectively reduces the warpage of the three-dimensional wood grain layer, enhances the decorative effect of the three-dimensional wood grain layer, and ensures the product quality of the stone-plastic flooring.

## Description

### Technical Field

The present invention belongs to the technical field of wood flooring manufacturing, and specifically relates to an SPC floor with 3D wood texture and a preparation method thereof.

### Background Art

Wood flooring mainly includes solid wood flooring, engineered wood flooring, and solid wood composite flooring. Solid wood flooring has natural textures, giving a natural, soft, and affinity-rich texture, as well as the characteristics of being warm in winter and cool in summer, with a good touch. However, the large consumption of wood for solid wood flooring results in high costs and is likely to cause serious damage to the ecological environment. Solid wood composite flooring is made by cross-laminating panels of different tree species, which to some extent overcomes the shortcomings of solid wood flooring's swelling and shrinkage with moisture changes, with a small dry shrinkage and wet expansion rate, good dimensional stability, and retaining the natural wood grain and comfortable foot feel of solid wood flooring. However, the structure of solid wood composite flooring is complex, requiring high production processes. At the same time, the texture patterns of solid wood composite flooring are not wear-resistant, prone to color fading, irreparable after water damage, and costly. In addition, the production process of solid wood composite flooring must use glue, which is highly likely to release harmful gases such as formaldehyde, posing potential hazards to the human body.

Laminate flooring is a floor formed by impregnating one or more layers of special paper with thermosetting amino resin, laying it on the surface of artificial board substrates such as particleboard or high-density fiberboard, adding a balance moisture-proof layer on the back, and adding a wear-resistant layer and decorative layer on the front, followed by hot pressing and molding. Laminate flooring has excellent anti-pollution, anti-corrosion, anti-pressure, wear-resistant, impact-resistant, and flame-retardant properties, good stability, easy maintenance, and low cost. The surface of laminate flooring generally achieves decorative effects by pasting printed paper, but the pasted paper is prone to peeling off and damage, and the texture is not realistic enough, with poor simulation and decoration effects. The pasted wear-resistant paper is prone to detachment from the flooring substrate during use due to stepping and vibration, reducing the service life of the wood flooring and lowering the quality and grade of the flooring.

With the development of science and technology, plastics are increasingly widely used in people's daily lives, and SPC flooring with PVC as the main material has gradually gained favor among consumers. SPC flooring (i.e., PVC sheet flooring) is a new type of ground decoration material, using stone powder to form a solid base layer with high density and high fiber network structure, covered with a super wear-resistant polymer PVC wear-resistant layer on the surface. SPC flooring has excellent properties such as green environmental protection, super wear resistance, waterproof and moisture-proof, fire-retardant, and recyclable. It has a wide variety of colors and patterns, with realistic and beautiful textures, capable of simulating various natural or artificial patterns, fully meeting personalized design needs, and is widely popular in developed countries in Europe and the United States as well as the Asia-Pacific market.

Except for solid wood flooring which has natural textures, other types of flooring require printing patterns on the substrate using printing processes, followed by surface treatments such as coating varnish to achieve wear-resistant and scratch-resistant effects. However, the surface decorative wood texture obtained in this way is presented in the form of flat patterns, lacking the visual impact effect of real wood textures. At the same time, this surface decorative wood texture has a rough and unobvious touch, appearing stiff and difficult to achieve a wood-like feel. Therefore, when reproducing wood textures on the SPC flooring substrate (i.e., SPC substrate), in addition to reproducing its flat color patterns, it is also necessary to reproduce a three-dimensional wood texture structure with a rich concave-convex sense on the surface of the SPC substrate, thereby obtaining a three-dimensional wood texture decorative effect more similar to the touch of natural wood, further achieving an SPC flooring with 3D wood texture that has fine, realistic, authentic, comfortable, and good three-dimensional effects. However, during the research and development process of the production and manufacturing process for SPC flooring with 3D wood texture, researchers found that in high-temperature or low-temperature environments, the SPC flooring with 3D wood texture is prone to warping, deformation, peeling, and other issues after thermal expansion and contraction. At the same time, when the SPC flooring is in an environment with uneven heating and cooling for a long time, it leads to uneven water dispersion within the SPC flooring, thereby causing deformation. In addition, during indoor installation of SPC flooring, the SPC substrate layer of the SPC flooring with 3D wood texture and the three-dimensional wood texture layer above the SPC substrate layer have different thicknesses, and the SPC substrate layer excessively absorbs moisture, causing tile-like arching and edge warping. This can even further lead to peeling and detachment between the three-dimensional wood texture layer and the SPC substrate layer, seriously affecting the service life and aesthetics of the SPC flooring with 3D wood texture.

The reason is that the three-dimensional wood texture layer in the SPC flooring with 3D wood texture has a multi-layer structure, resulting in the paint layer coated on the surface of the SPC substrate for forming the three-dimensional wood texture layer being too thick, with numerous production process steps, and certain internal stresses remaining in the SPC flooring after multiple roller pressing steps that cannot be completely eliminated. At the same time, the SPC flooring with 3D wood texture prepared by digital printing process has ultra-light and ultra-thin characteristics, with a thickness of only 2~3 mm and a weight per square meter of only 2~3 kg, less than 10% of ordinary ground materials. The SPC flooring with 3D wood texture also has a solid base layer with high density and high fiber network structure composed of stone powder, with very high hardness. The shrinkage rate between the three-dimensional wood texture layer above the SPC substrate layer and the SPC substrate layer is different. When liquid paint solidifies to form the three-dimensional wood texture layer, its volume shrinks. As the paint is layered on the SPC substrate layer, this shrinkage force becomes larger and larger, and the wrinkling deformation of the three-dimensional wood texture layer becomes more obvious, with excessive warping leading to convex deformation of the three-dimensional wood texture layer. In more severe warping, the adhesion between the SPC substrate and the three-dimensional wood texture layer decreases, further leading to peeling and detachment between the SPC substrate layer and the three-dimensional wood texture layer above it.

To this end, researchers have tried to apply as little paint layer as possible on the surface of the SPC substrate. When the paint coating becomes thinner, it easily causes blurred patterns, unclear wood textures, and the three-dimensional wood texture layer is prone to wear, resulting in poor decorative effects. Researchers have also tried to reduce the shrinkage rate difference between the SPC substrate and the three-dimensional wood texture layer to avoid wrinkling and warping of the three-dimensional wood texture layer. For example, Patent CN101629446A provides a printed flooring and its production method, in which a first coating layer is provided on the surface of the flooring substrate, a printed pattern layer is covered on the first coating layer, a second coating layer is provided on the printed pattern layer, and a topcoat layer is provided on the second coating layer, where the first coating layer and the second coating layer are anti-shrinkage paint layers formed by soft polymer compositions. By adding an anti-shrinkage paint formed by a soft polymer composition before printing the pattern, the problem of different shrinkage rates between the substrate and the pattern layer is solved. However, the soft polymer composition has certain plasticity after film formation and will undergo certain stretching or compression under external forces, causing inaccurate ink spraying for forming the pattern layer above it, further leading to large differences in the formed patterns.

In addition, researchers have attempted to directly improve the performance of the SPC substrate to obtain an SPC flooring with better mechanical properties and lower dimensional deformation rate. For example, Patent CN111792876A provides an SPC stone plastic flooring material and its flooring, disclosing an SPC stone plastic flooring material comprising: 100 parts by weight of PVC resin; 220-260 parts by weight of heavy calcium carbonate; 40-80 parts by weight of nano calcium carbonate; 2-4 parts by weight of stearic acid; 8-12 parts by weight of impact modifier; 4-8 parts by weight of color masterbatch. The raw materials of the color masterbatch consist of PVC resin, EVA wax, C.I. Pigment Yellow 139, composite dispersant, and optional other auxiliaries; wherein the composite dispersant is selected from acrylic rosin acid grafted poly-(12-hydroxystearic acid) and diethanol lauramide. However, the dispersants or auxiliaries selected in the color masterbatch have poor diffusion and miscibility, easily causing the formed SPC substrate to become brittle and crack, affecting the quality of the SPC flooring. At the same time, the color masterbatch contains C.I. Pigment Yellow 139, which is prone to pigment migration, causing obvious color development in the prepared SPC substrate, further leading to large color differences when printing patterns on the SPC substrate subsequently, affecting the appearance of the SPC flooring.

In addition, researchers have continuously improved the performance of the paint coating that solidifies to form the three-dimensional wood texture layer to prepare a photocurable coating with strong adhesion, excellent wear resistance, environmental friendliness, soft gloss, and high hardness to meet various market demands. For example, Patent CN115558401A provides a high-strength SPC flooring UV curable coating and its preparation method, by adding acrylic compounds, photoinitiators, and solvents into a container, mixing and stirring, and adding matting agents, followed by stirring to prepare a high-strength SPC flooring UV curable coating. However, the UV curable coating has high viscosity, easily causing "stringing" and surface roughness during spraying. Moreover, it has low solid content, making it difficult to balance hardness and elasticity, and a single spray cannot achieve a very thick coating film, with insufficient fullness of the coating film.

Therefore, researchers hope to find a new method for preventing warping and deformation of the three-dimensional wood texture layer in the SPC flooring with 3D wood texture, even leading to peeling and detachment from the SPC substrate layer. The method is efficient, simple to operate, and low in application cost, but this problem has not been solved.

### Summary of the Invention

The present invention is to overcome the defect in the prior art preparation process of SPC flooring with 3D wood texture where the three-dimensional wood texture layer contained therein is prone to warping, causing convex deformation of the SPC flooring, and provides an SPC flooring with 3D wood texture and a preparation method thereof.

According to one aspect of the present invention, the applicant has discovered a manufacturing method for an SPC flooring with 3D wood texture by treating the surface of the SPC substrate layer.

According to the first aspect, to achieve the above invention objectives, the present invention is achieved by the following technical solution:
A method for manufacturing an SPC flooring with 3D wood texture, comprising at least the following steps:
(S.1) A step of extruding to form a stone plastic flooring substrate;
(S.2) A step of covering the surface of the stone plastic flooring substrate with a base color layer;
(S.3) A step of imparting irregularly distributed pores on the surface of the base color layer;
(S.4) A step of subjecting the surface of the base color layer obtained in the previous step to high-energy beam stimulation;
(S.5) A step of coating at least a portion of the surface of the base color layer obtained in the previous step with a primer, and curing the primer to obtain a primer layer;
(S.6) A step of sequentially forming a color paint layer, a pattern layer, a three-dimensional wood texture layer, and a topcoat layer from bottom to top on at least a portion of the surface of the primer layer.

Preferably, the process of obtaining the base color layer in the step (S.2) comprises:
A step of covering the surface of the stone plastic flooring substrate with a base color film.

Preferably, the base color layer comprises at least one or a combination of polyvinyl chloride resin, colorant, plasticizer, heat stabilizer, and lubricant.

Preferably, the base color layer is white, with a thickness of 0.05~0.15 mm.

Preferably, the process of imparting irregularly distributed pores on the surface of the base color layer in the step (S.3) comprises:
A step of sanding the surface of the base color layer by contacting it with an abrasive tool.

Preferably, the surface roughness Ra value of the base color layer after contact with the abrasive tool is 0.3~1.6 µm.

Preferably, the abrasive tool is any one of a belt sander, a belt grinding machine, or a belt polishing machine.

Preferably, the abrasive tool comprises one or a combination of sand belt, sandpaper, or gauze.

Preferably, the process of subjecting the surface of the base color layer to high-energy beam stimulation in the step (S.4) comprises:
A step of subjecting the surface of the base color layer to high-frequency high-voltage corona discharge.

Preferably, the current of the high-frequency high-voltage corona discharge is 4~8 A.

Preferably, the surface tension of the surface of the base color layer after high-energy beam stimulation is 36~40 mN/m.

Preferably, the rate of subjecting the surface of the base color layer to high-frequency high-voltage corona discharge is 15~30 m/min.

Preferably, the distance between the surface of the base color layer and the discharge electrode applying high-frequency high voltage is 2~5 cm.

Preferably, the primer in the step (S.5) comprises at least photocrosslinkable resin and photoinitiator.

Preferably, the photocrosslinkable resin comprises any one or a combination of unsaturated polyester, epoxy resin, acrylic resin, acrylic-modified polyurethane resin, acrylic-modified silicone resin, acrylic-modified epoxy resin, waterborne epoxy acrylate, waterborne polyurethane acrylate, or waterborne polyester acrylate.

Preferably, the photoinitiator comprises any one of free radical polymerization initiator, cationic polymerization initiator, energy transfer type initiator, or ionic reaction type initiator.

Preferably, the amount of the primer coated on the surface of the base color layer in the step (S.5) is 10~15 g/m².

Preferably, the color paint layer in the step (S.6) is white, and the amount of the color paint for the color paint layer is 15~25 g/m².

Preferably, the process of forming the pattern layer in the step (S.6) comprises:
A step of coating at least a portion of the surface of the color paint layer with ink for forming a wood grain pattern and curing to obtain the pattern layer.

Preferably, the amount of ink for the pattern layer in the step (S.6) is 6~10 g/m².

Preferably, the process of forming the three-dimensional wood texture layer in the step (S.6) comprises:
A step of covering at least a portion of the surface of the pattern layer with a three-dimensional wood texture layer having a three-dimensional structure.

Preferably, the process of forming the topcoat layer in the step (S.6) comprises:
A step of coating at least a portion of the surface of the three-dimensional wood texture layer with topcoat and curing to obtain the topcoat layer.

Preferably, the amount of the topcoat for the topcoat layer in the step (S.6) is 10~15 g/m².

According to another aspect of the present invention, the applicant has discovered an SPC flooring with 3D wood texture.

According to the second aspect, to achieve the above invention objectives, the present invention is achieved by the following technical solution:
An SPC flooring with 3D wood texture prepared by the method as described above.

Therefore, the present invention has the following beneficial effects:
During the research and development of the production process for SPC flooring with 3D wood texture, after repeated experiments, the applicant found that compared to the SPC substrate, the three-dimensional wood texture layer in the SPC flooring with 3D wood texture is extremely prone to edge warping and convex deformation. The reason is that the three-dimensional wood texture layer in the SPC flooring with 3D wood texture has a multi-layer structure, resulting in the paint layer coated on the surface of the SPC substrate for forming the three-dimensional wood texture layer being too thick. Moreover, due to numerous production process steps, certain internal stresses remain in the SPC flooring after multiple roller pressing steps that cannot be completely eliminated. At the same time, the SPC flooring with 3D wood texture prepared by digital printing process has ultra-light and ultra-thin characteristics, with a thickness of only 2~3 mm and a weight per square meter of only 2~3 kg, less than 10% of ordinary ground materials. The SPC flooring with 3D wood texture also has a solid SPC base layer with high density and high fiber network structure composed of stone powder, with very high hardness. The shrinkage rate between the three-dimensional wood texture layer above the SPC substrate layer and the SPC substrate layer is different. When liquid paint solidifies to form the three-dimensional wood texture layer, its volume shrinks. As the paint is layered on the SPC substrate layer, this shrinkage force becomes larger and larger, continuously accumulating and gradually reaching a maximum value. The wrinkling and convex deformation of the three-dimensional wood texture layer also becomes more obvious. Once this maximum shrinkage force exceeds the bonding force between the SPC substrate and the three-dimensional wood texture layer, it will cause relative slippage between the three-dimensional wood texture layer and the SPC substrate layer, reducing the adhesion between the SPC substrate layer and the three-dimensional wood texture layer, further leading to peeling and detachment between the SPC substrate layer and the three-dimensional wood texture layer above it. This is consistent with the more obvious peeling situation between the SPC substrate layer and the three-dimensional wood texture layer above it at the warping deformation site. The applicant further explored and found that on the SPC substrate at the peeling and detachment site, the surface of the covered white PVC film has obvious oily substances exuding. These exuded oily substances continue to accumulate, reducing the surface adhesion of the white PVC film, further lowering the bonding force between the SPC substrate and the three-dimensional wood texture layer, causing problems such as color overlap and inaccurate patterns when directly printing the three-dimensional wood texture layer on the SPC substrate subsequently, further affecting the simulation effect and poor decorative effect of the SPC flooring with 3D wood texture.

The applicant has creatively discovered that by merely adding a step of surface treatment to the base color layer above the SPC substrate, the surface roughness of the base color layer is improved, and its surface energy is significantly enhanced, strengthening the adhesion between the SPC substrate layer and the three-dimensional wood texture layer above it, making the bonding more stable, with superior anti-peeling performance. At the same time, it effectively improves the wettability of the base color layer surface, making it easy to bond with the paint for printing the three-dimensional wood texture layer, reducing the warping degree of the three-dimensional wood texture layer. It further enhances the decorative effect of the three-dimensional wood texture layer and improves the product quality of the SPC flooring with 3D wood texture.

### Detailed Description of the Invention

The present invention will be further described below in conjunction with specific embodiments. Those of ordinary skill in the art will be able to implement the present invention based on these descriptions. In addition, the embodiments of the present invention described below are generally only some embodiments of the present invention, not all embodiments. Therefore, based on the embodiments of the present invention, all other embodiments obtained by those of ordinary skill in the art without creative labor shall belong to the protection scope of the present invention.

According to one aspect of the present invention, the applicant has discovered a manufacturing method for an SPC flooring with 3D wood texture by treating the surface of the SPC substrate layer.

According to the first aspect, to achieve the above invention objectives, the present invention is achieved by the following technical solution:
A method for manufacturing an SPC flooring with 3D wood texture, comprising at least the following steps:
(S.1) A step of extruding to form a stone plastic flooring substrate;
(S.2) A step of covering the surface of the stone plastic flooring substrate with a base color layer;
(S.3) A step of imparting irregularly distributed pores on the surface of the base color layer;
(S.4) A step of subjecting the surface of the base color layer obtained in the previous step to high-energy beam stimulation;
(S.5) A step of coating at least a portion of the surface of the base color layer obtained in the previous step with a primer, and curing the primer to obtain a primer layer;
(S.6) A step of sequentially forming a color paint layer, a pattern layer, a three-dimensional wood texture layer, and a topcoat layer from bottom to top on at least a portion of the surface of the primer layer.

During the research and development of the production process for SPC flooring with 3D wood texture, after repeated experiments, the applicant found that compared to the SPC substrate, the three-dimensional wood texture layer in the SPC flooring with 3D wood texture is extremely prone to edge warping and convex deformation. The reason is that the three-dimensional wood texture layer in the SPC flooring with 3D wood texture has a multi-layer structure, resulting in the paint layer coated on the surface of the SPC substrate for forming the three-dimensional wood texture layer being too thick. Moreover, due to numerous production process steps, certain internal stresses remain in the SPC flooring after multiple roller pressing steps that cannot be completely eliminated. At the same time, the SPC flooring with 3D wood texture prepared by digital printing process has ultra-light and ultra-thin characteristics, with a thickness of only 2~3 mm and a weight per square meter of only 2~3 kg, less than 10% of ordinary ground materials. The SPC flooring with 3D wood texture also has a solid SPC base layer with high density and high fiber network structure composed of stone powder, with very high hardness. The shrinkage rate between the three-dimensional wood texture layer above the SPC substrate layer and the SPC substrate layer is different. When liquid paint solidifies to form the three-dimensional wood texture layer, its volume shrinks. As the paint is layered on the SPC substrate layer, this shrinkage force becomes larger and larger, continuously accumulating upward, thereby reaching a maximum value at the top of the three-dimensional wood texture layer. The wrinkling and convex deformation of the three-dimensional wood texture layer also becomes more obvious. Once this maximum shrinkage force exceeds the bonding force between the SPC substrate and the three-dimensional wood texture layer, it will cause relative slippage between the three-dimensional wood texture layer and the SPC substrate layer, reducing the adhesion between the SPC substrate layer and the three-dimensional wood texture layer, further leading to peeling and detachment between the SPC substrate layer and the three-dimensional wood texture layer above it. This is consistent with the more obvious peeling situation between the SPC substrate layer and the three-dimensional wood texture layer above it at the warping deformation site. The applicant further explored and found that on the SPC substrate at the peeling and detachment site, the surface of the covered white PVC film has obvious oily substances exuding.

After consulting the literature, it is understood that flooring manufacturers generally adopt the method of pasting or coating a base color film on the surface of the SPC substrate to form the base color layer to cover the inherent color of the SPC substrate itself. Over time, small molecule processing aids, plasticizers, lubricants, and other substances contained in the base color film will slowly migrate to the surface of the base color layer, forming obvious oily substances. The oily substances exuding on the surface of the base color layer continue to accumulate, and when directly printing the three-dimensional wood texture layer on the substrate subsequently, problems such as color overlap and inaccurate patterns are likely to occur, further affecting the simulation effect and poor decorative effect of the SPC flooring with 3D wood texture.

Therefore, the applicant innovatively treats the surface of the base color layer above the SPC substrate to remove the oily substances exuding on the surface of the base color layer, effectively avoiding the continuous accumulation of the exuded oily substances to prevent problems such as color overlap and inaccurate patterns when directly printing the three-dimensional wood texture layer on the substrate subsequently. In addition, by imparting irregularly distributed pores on the surface of the base color layer above the SPC substrate, it helps to increase the surface roughness of the base color layer. At the same time, it helps the paint or coating for forming the three-dimensional wood texture layer above the base color layer to enter and penetrate downward through the pores, enhancing the adhesion between the SPC substrate layer and the three-dimensional wood texture layer above it, making the bonding more stable, effectively enhancing the anti-deformation effect of the SPC flooring with 3D wood texture and avoiding warping and wrinkling. In addition, the multiple irregularly distributed pores formed on the surface of the base color layer promote the base color layer to have high compressive resistance, light weight, non-absorbent, non-breathable, wear-resistant, and non-degradable properties, which can improve the thermal insulation performance of the SPC flooring with 3D wood texture. It can also play a wave-blocking role, achieving sound reduction, sound absorption, and noise reduction effects, enhancing the practicality of the SPC flooring with 3D wood texture.

In addition, the applicant also performs high-energy beam stimulation treatment on the surface of the base color layer to induce chemical bond breakage and degradation of molecules on the surface of the base color layer, increasing its surface roughness. During the high-energy beam stimulation treatment process, a large amount of strong oxidants such as ozone is also generated, oxidizing the molecules on the surface of the base color layer to produce polar groups such as carbonyl and peroxide, forming a polar surface layer, thereby improving its surface energy, making it easy to bond with the paint for printing the three-dimensional wood texture layer. At the same time, it has the function of removing oil stains, moisture, and dust from the surface of the base color layer, and using high-energy beam erosion on the surface of the base color layer can significantly improve the wettability and adhesion of the surface of the base color layer. Thereby, the warping deformation rate of the three-dimensional wood texture layer is further effectively reduced, the decorative effect of the three-dimensional wood texture layer is improved, and the product quality of the SPC flooring with 3D wood texture is ensured.

On at least a portion of the surface of the base color layer after the above treatment, a primer is coated, and then the primer is cured to form a primer layer. On at least a portion of the surface of the primer layer, color paint, ink for forming the color pattern layer, paint for forming the three-dimensional wood texture layer, and topcoat for protecting the three-dimensional wood texture layer and providing other functional effects (such as antibacterial, antistatic, wear-resistant, etc.) are sequentially coated from bottom to top, thereby sequentially forming the color paint layer, pattern layer, three-dimensional wood texture layer, and topcoat layer.

In a preferred embodiment of the present invention, the process of obtaining the base color layer in the step (S.2) comprises:
A step of covering the surface of the stone plastic flooring substrate with a base color film.

In a preferred embodiment of the present invention, the stone plastic flooring substrate (i.e., SPC substrate) and the base color film (i.e., PVC film) can be composited together by online lamination. The raw materials and additives constituting the SPC substrate are added to the main extruder, melted by the main extruder, and extruded into the main channel of the mold, then extruded from the mold to form the SPC substrate layer; the PVC film constituting the base color layer is unwound and online roller composited with the above-obtained SPC substrate layer, thereby obtaining an SPC substrate layer with the surface covered by the PVC film.

In another preferred embodiment of the present invention, the SPC substrate and the base color film (i.e., PVC film) can also be composited together by co-extrusion. The raw materials and additives constituting the SPC substrate are added to the main extruder, melted by the main extruder, and extruded into the main channel of the mold, then extruded from the mold to form the SPC substrate layer; the PVC raw materials and additives constituting the PVC film are added to the auxiliary extruder, melted by the auxiliary extruder, and extruded into the auxiliary channel of the mold, then diffused in the co-extrusion casting space of the mold, covering the SPC substrate layer, and after heat exchange by the cooling channel plate in the mold, solidified and shaped, finally extruded from the mold to obtain an SPC substrate layer with the surface covered by the PVC film.

In another preferred embodiment of the present invention, the SPC substrate is obtained by extrusion molding. After the SPC substrate is extruded, its surface is coated with one or more layers of white paint, thereby forming the base color layer on the surface of the SPC substrate.

Covering the surface of the SPC substrate with one or more layers of PVC film or white paint covers the base color of the SPC substrate, effectively avoiding situations such as color overlap, inaccurate color development, and large color differences during the subsequent color pattern printing process on the SPC substrate. Among them, the SPC substrate and the PVC film are composited together by online lamination, effectively shortening the process steps, making the process simpler and improving controllability, and increasing production efficiency. In comparison, the surface of the PVC film composited with the SPC substrate layer by co-extrusion is very smooth, and the direct printing pattern effect is poor, even causing ghosting problems. In addition, coating white paint on the surface of the SPC substrate has a strong odor and is difficult to volatilize, causing certain harm to the human body. It consumes a large amount, has high cost, and is prone to sagging, yellowing, local wrinkling, cracking, and other issues on the surface of the SPC substrate. In addition, the volatilization of water, solvents, and other substances in the white paint will also lead to exposure of the substrate's base color, further causing unstable pattern colors and large color differences in the subsequent printing process. Moreover, the drying time of white paint is long, occupying a large space, resulting in reduced production efficiency of the SPC flooring manufacturing process.

In a preferred embodiment of the present invention, the base color layer comprises at least one or a combination of polyvinyl chloride resin, colorant, plasticizer, heat stabilizer, and lubricant.

The main component of the base color layer (also known as the base color film) is polyvinyl chloride resin (PVC), because PVC has a small linear expansion coefficient and excellent fire-retardant properties. At the same time, PVC has stable chemical properties, outstanding resistance to chemical organic solvents, and corrosion resistance. Appropriate colorants can also be selected and added to the base color film according to the final color requirements of the SPC flooring product, thereby achieving coverage of the inherent color of the SPC substrate. This further prevents situations such as color overlap, inaccurate color development, and large color differences in the printed patterns of the SPC flooring. Due to the close temperatures of viscous flow and degradation of the base color film, it is extremely prone to various forms of degradation during the processing, causing loss of performance. Therefore, it is necessary to add heat stabilizers and lubricants to the formulation of the base color film to improve its thermal stability. At the same time, it reduces the friction between PVC molecular chains in the base color film, prevents adhesion to equipment after PVC melting, and facilitates demolding during processing and extrusion molding of the base color film. Adding plasticizers to the formulation of the base color film softens PVC and effectively reduces the processing temperature of the base color film. PVC plasticizers often use small molecule esters such as phthalates, which do not participate in the polymerization of PVC molecular chains in the PVC system but bind to PVC molecular chains via hydrogen bonds or van der Waals forces, so they often volatilize, migrate, or extract during use. The migration of plasticizers easily causes the base color film to harden, become brittle, or even break. The plasticizers exuding on the surface of the base color film will also pollute the environment.

In another preferred embodiment of the present invention, the base color layer may further comprise one or a combination of light stabilizer, antioxidant, impact modifier, filler, processing aid, antistatic agent, flame retardant, or biocide.

Light stabilizers can prevent UV degradation of PVC in the base color film. Antioxidants can prevent oxygen degradation of PVC. Impact modifiers can improve the toughness of PVC. Fillers, i.e., fillers, are used to reduce production costs. Processing aids can improve processing performance and formability. Antistatic agents can reduce static accumulation on the surface of the base color film and eliminate potential static hazards caused by static accumulation. Flame retardants can improve the flame-retardant performance of the base color film. Biocides can inhibit bacteria and mold, prevent microbial erosion and degradation of the base color film, and enhance its antibacterial performance.

In a preferred embodiment of the present invention, the base color layer is white, with a thickness of 0.05~0.15 mm.

In a preferred embodiment of the present invention, the softening temperature of the base color layer is 70~85°C.

When the temperature of the surface of the base color layer is 70~85°C, the base color layer begins to soften and flow viscously. Due to the poor thermal stability of PVC in the base color layer, continued heating above 120°C for a long time will cause its decomposition, slowly releasing hydrogen chloride gas, causing discoloration of the base color layer.

In a preferred embodiment of the present invention, the process of imparting irregularly distributed pores on the surface of the base color layer in the step (S.3) comprises:
A step of sanding the surface of the base color layer by contacting it with an abrasive tool.

By using flexible abrasive tools and fine abrasive particles or other polishing media to sand and modify the surface of the base color layer, the oily substances, bubbles, wood burrs, dust particles, and other exuding on the underlying surface are removed. At the same time, sanding the surface of the base color layer forms several irregularly distributed pores on the surface of the base color layer, increasing its surface roughness and further increasing the adhesion of the base color layer. In addition, it helps the paint or coating for forming the three-dimensional wood texture layer above the base color layer to enter and penetrate downward through the pores, promoting enhanced adhesion between the base color layer, the SPC substrate layer, and the three-dimensional wood texture layer above the SPC substrate layer, making the bonding more stable. This further effectively enhances the anti-deformation effect of the SPC flooring with 3D wood texture and avoids warping and wrinkling. In addition, through the above settings, the appearance saturation of the surface of the base color layer is effectively reduced, reducing its gloss. Thereby, the diffuse reflection of the surface of the base color layer increases, the specular reflection decreases, further making the surface of the SPC flooring with 3D wood texture present a matte effect.

In a further preferred embodiment of the present invention, the process of imparting irregularly distributed pores on the surface of the base color layer in the step (S.3) comprises: a step of sanding the surface of the base color layer by contacting it with an abrasive tool. The sanding method includes hand sanding and/or machine sanding. Machine sanding takes less time, can be used for large-area sanding, helps improve production efficiency, and achieves uniform sanding.

In a further preferred embodiment of the present invention, the process of imparting irregularly distributed pores on the surface of the base color layer in the step (S.3) comprises: a step of sanding the surface of the base color layer by contacting it with an abrasive tool. The sanding method includes one or a combination of dry sanding, wet sanding, oil sanding, wax sanding, polishing paste polishing, electrolytic polishing, ultrasonic polishing, magnetic abrasive polishing, or fluid polishing.

In a further preferred embodiment of the present invention, the process of imparting irregularly distributed pores on the surface of the base color layer in the step (S.3) comprises: a step of sanding the surface of the base color layer by contacting it with an abrasive tool. The dry sanding includes one or a combination of coarse sanding, flat sanding, and fine sanding. Coarse sanding can remove oily substances exuding on the surface of the base color layer, bubbles caused by improper operation, wood burrs, dust particles, etc. Flat sanding often uses sandcloth or sandpaper wrapped around small wooden blocks or hard rubber for sanding to level, making the surface of the base color layer smoother. Fine sanding has high requirements for the fineness of abrasive particles, often using finer abrasive particles, which helps increase the smoothness of the surface of the base color layer and achieves better polishing effects.

In a further preferred embodiment of the present invention, the process of imparting irregularly distributed pores on the surface of the base color layer in the step (S.3) comprises: a step of sanding the surface of the base color layer by contacting it with an abrasive tool. The sanding direction is along the wood grain direction. Avoid cross sanding or irregular random sanding that leaves messy sanding marks on the surface of the base color layer. When changing to a different type of abrasive, the sanding direction should be changed by 30°~45° from the previous sanding direction to avoid bringing coarse abrasive particles to the next finer grinding operation. During sanding, light sanding should also be noted to avoid sanding damage, collapse, or deformation of protruding parts such as lines and edges on the surface of the base color layer, affecting the smoothness and aesthetics of the lines, edges, and other shapes.

In a preferred embodiment of the present invention, the surface roughness Ra value of the base color layer after contact with the abrasive tool is 0.3~1.6 µm.

In a preferred embodiment of the present invention, the abrasive tool is any one of a belt sander, a belt grinding machine, or a belt polishing machine.

In a preferred embodiment of the present invention, the abrasive tool comprises one or a combination of sand belt, sandpaper, or gauze.

In a further preferred embodiment of the present invention, the abrasive tool comprises a sand belt with a mesh size of 120~320 mesh. When the mesh size of the sand belt is higher than 320 mesh and the surface roughness Ra value of the base color layer after contact with the abrasive tool is lower than 0.3 µm, the finer the particles of the sand belt, the smoother and flatter the sanded surface of the base color layer, easily reducing the adhesion of the surface of the base color layer. When the mesh size of the sand belt is lower than 120 mesh and the surface roughness Ra value of the base color layer after contact with the abrasive tool is higher than 1.6 µm, the particles of the sand belt are too coarse, the sanded surface of the base color layer is too rough, the effective contact area between it and the SPC substrate layer and the three-dimensional wood texture layer is too small, the pressure is too high, causing excessive friction resistance, rapid wear, and poor wear resistance. In addition, the overly rough sanded surface of the base color layer causes a large number of pits, requiring more primer to be coated on the surface of the base color layer during later printing to fill the pits and prevent affecting pattern clarity.

In a preferred embodiment of the present invention, the process of subjecting the surface of the base color layer to high-energy beam stimulation in the step (S.4) comprises:
A step of subjecting the surface of the base color layer to high-frequency high-voltage corona discharge.

The main component of the base color film is PVC, which is a non-polar polymer with low surface tension. Most known paints, adhesives, etc., for forming the three-dimensional wood texture layer are difficult to adhere firmly to the surface of the base color film. By performing corona treatment on the surface of the base color layer, chemical bonds of PVC molecules are induced to break and degrade, increasing its surface roughness. During the corona discharge process, a large amount of ozone is also generated. Ozone is a strong oxidant that can oxidize PVC molecules to produce polar groups such as carbonyl and peroxide, thereby improving its surface energy, making the surface of the base color layer have higher adhesion, higher affinity with paints or coatings, and easier to bond with the paint for printing the three-dimensional wood texture layer. At the same time, it has the function of removing oil stains, moisture, and dust from the surface of the base color layer, helping to improve visual effects. In addition, using high frequency and high voltage (high-frequency AC voltage up to 5000~15000 V/m²) for corona discharge on the surface of the treated base color layer generates low-temperature plasma, causing free radical reactions on the surface of the base color layer to crosslink the polymer, increasing its wettability to polar solvents, making paints and the like easier to penetrate. This further effectively reduces the warping deformation rate of the three-dimensional wood texture layer, improves the decorative effect of the three-dimensional wood texture layer, and ensures the product quality of the SPC flooring with 3D wood texture.

In a preferred embodiment of the present invention, the current of the high-frequency high-voltage corona discharge is 4~8 A.

In a preferred embodiment of the present invention, the surface tension of the surface of the base color layer after high-energy beam stimulation is 36~40 mN/m.

When the surface tension of the surface of the base color layer after high-energy beam stimulation is lower than 36 mN/m and the current of the high-frequency high-voltage corona discharge is lower than 4 A, the wettability of the surface of the base color layer is not significantly improved and its surface viscosity is poor, making it difficult to coat the paint for printing the three-dimensional wood texture layer on its surface, and the three-dimensional wood texture layer is difficult to display. When the surface tension of the surface of the base color layer after high-energy beam stimulation is higher than 40 mN/m and the current of the high-frequency high-voltage corona discharge is higher than 8 A, the surface of the base color layer is prone to film sticking and paint back-sticking. In more severe cases, corona breakdown occurs to produce micropores, damaging the sealing and barrier properties of the base color layer.

In a preferred embodiment of the present invention, the rate of subjecting the surface of the base color layer to high-frequency high-voltage corona discharge is 15~30 m/min.

The rate of subjecting the surface of the base color layer to high-frequency high-voltage corona discharge should be consistent with the transmission speed of the SPC substrate on the production process assembly line, keeping the output power stable during corona treatment, further ensuring stable output voltage, thereby making the corona treatment effect better.

In a preferred embodiment of the present invention, the distance between the surface of the base color layer and the discharge electrode applying high-frequency high voltage is 2~5 cm.

When the distance between the surface of the base color layer and the discharge electrode applying high-frequency high voltage is lower than 2 cm, the energy released by the discharge electrode is prone to corona breakdown, damaging the sealing and barrier properties of the base color layer. When the distance between the surface of the base color layer and the discharge electrode applying high-frequency high voltage is higher than 5 cm, the energy released by the discharge electrode is dispersed into a larger space, the corona treatment intensity decreases, and the treatment effect becomes poor.

In another preferred embodiment of the present invention, the process of subjecting the surface of the base color layer to high-energy beam stimulation in the step (S.4) comprises:
A step of subjecting the surface of the base color layer to laser beam excitation.

Using a laser beam to treat the surface of the base color layer, most of the laser is absorbed by the surface of the base color layer, with a small portion reflected off the surface of the base color layer, thereby changing the composition and microstructure of the surface of the base color layer and improving its surface roughness.

In a preferred embodiment of the present invention, the primer in the step (S.5) comprises at least photocrosslinkable resin and photoinitiator.

In a preferred embodiment of the present invention, the photocrosslinkable resin comprises any one or a combination of unsaturated polyester, epoxy resin, acrylic resin, acrylic-modified polyurethane resin, acrylic-modified silicone resin, acrylic-modified epoxy resin, waterborne epoxy acrylate, waterborne polyurethane acrylate, or waterborne polyester acrylate.

In a preferred embodiment of the present invention, the photoinitiator comprises any one of free radical polymerization initiator, cationic polymerization initiator, energy transfer type initiator, or ionic reaction type initiator.

In a preferred embodiment of the present invention, the amount of the primer coated on the surface of the base color layer in the step (S.5) is 10~15 g/m².

In a preferred embodiment of the present invention, the color paint layer in the step (S.6) is white, and the amount of the color paint for the color paint layer is 15~25 g/m².

In a preferred embodiment of the present invention, the process of forming the pattern layer in the step (S.6) comprises:
A step of coating at least a portion of the surface of the color paint layer with ink for forming a wood grain pattern and curing to obtain the pattern layer.

In a preferred embodiment of the present invention, the amount of ink for the pattern layer in the step (S.6) is 6~10 g/m².

In a preferred embodiment of the present invention, the process of forming the three-dimensional wood texture layer in the step (S.6) comprises:
A step of covering at least a portion of the surface of the pattern layer with a three-dimensional wood texture layer having a three-dimensional structure.

In a preferred embodiment of the present invention, the process of forming the topcoat layer in the step (S.6) comprises:
A step of coating at least a portion of the surface of the three-dimensional wood texture layer with topcoat and curing to obtain the topcoat layer.

In a preferred embodiment of the present invention, the amount of the topcoat for the topcoat layer in the step (S.6) is 10~15 g/m².

According to another aspect of the present invention, the applicant has discovered an SPC flooring with 3D wood texture.

According to the second aspect, to achieve the above invention objectives, the present invention is achieved by the following technical solution:
An SPC flooring with 3D wood texture prepared by the method as described above.

### Example 1

This example provides a method for manufacturing an SPC flooring with 3D wood texture, comprising the following steps:
(S.1) Adding the raw materials and additives constituting the SPC substrate to the main extruder, melting them by the main extruder, extruding into the main channel of the mold, and then extruding from the mold to form the SPC substrate layer;
(S.2) Unwinding a PVC white film (with a softening temperature of 80°C) with a thickness of 0.07 mm constituting the base color layer and online roller compositing it with the SPC substrate layer obtained in step (S.1), thereby obtaining an SPC substrate layer with the surface covered by the PVC white film;
(S.3) Using a belt sander (sand belt mesh size of 240 mesh) to sand the surface of the PVC white film, making the surface roughness Ra value of the sanded PVC white film 0.6 µm;
(S.4) Using a corona treatment machine to apply high-frequency high-voltage electricity with a current of 6 A, discharge rate of 30 m/min, and distance between the PVC white film surface and the discharge electrode applying high-frequency high voltage of 4 cm to the surface of the sanded PVC white film in step (S.3) for corona discharge, making the surface tension of the PVC white film after corona treatment 38 mN/m;
(S.5) Coating primer on the surface of the corona-treated PVC white film obtained in step (S.4), with the primer amount of 12 g/m², then irradiating with 160 w/cm ultraviolet light generated by a medium-pressure Hg lamp to cure the primer and obtain the primer layer;
(S.6) Sequentially coating color paint, ink for forming the pattern layer, paint or coating for forming the three-dimensional wood texture layer, and topcoat for protecting the three-dimensional wood texture layer from bottom to top on the surface of the primer layer obtained in step (S.5), then irradiating with 160 w/cm ultraviolet light generated by a medium-pressure Hg lamp to sequentially form the color paint layer, pattern layer, three-dimensional wood texture layer, and topcoat layer. Wherein, the amount of color paint is 17 g/m², the amount of ink for forming the pattern layer is 7 g/m², the amount of paint for forming the three-dimensional wood texture layer is 205 g/m², and the amount of topcoat is 12 g/m².

This example also provides an SPC flooring with 3D wood texture prepared by the method as described above.

### Example 2

This example differs from Example 1 in that:
This example provides a method for manufacturing an SPC flooring with 3D wood texture. In step (S.3), the sand belt mesh size is 120 mesh, making the surface roughness Ra value of the sanded PVC white film 1.6 µm. The rest is the same as in Example 1.

### Example 3

This example differs from Example 1 in that:
This example provides a method for manufacturing an SPC flooring with 3D wood texture. In step (S.3), the sand belt mesh size is 180 mesh, making the surface roughness Ra value of the sanded PVC white film 0.8 µm. The rest is the same as in Example 1.

### Example 4

This example differs from Example 1 in that:
This example provides a method for manufacturing an SPC flooring with 3D wood texture. In step (S.3), the sand belt mesh size is 320 mesh, making the surface roughness Ra value of the sanded PVC white film 0.3 µm. The rest is the same as in Example 1.

### Example 5

This example differs from Example 1 in that:
This example provides a method for manufacturing an SPC flooring with 3D wood texture. In step (S.4), using a corona treatment machine to apply high-frequency high-voltage electricity with a current of 4 A to the surface of the sanded PVC white film in step (S.3) for corona discharge, making the surface tension of the PVC white film after corona treatment 36 mN/m. The rest is the same as in Example 1.

### Example 6

This example differs from Example 1 in that:
This example provides a method for manufacturing an SPC flooring with 3D wood texture. In step (S.4), using a corona treatment machine to apply high-frequency high-voltage electricity with a current of 8 A to the surface of the sanded PVC white film in step (S.3) for corona discharge, making the surface tension of the PVC white film after corona treatment 40 mN/m. The rest is the same as in Example 1.

### Example 7

This example differs from Example 1 in that:
This example provides a method for manufacturing an SPC flooring with 3D wood texture. In step (S.4), using a corona treatment machine to apply high-frequency high-voltage electricity with a discharge rate of 15 m/min to the surface of the sanded PVC white film in step (S.3) for corona discharge. The rest is the same as in Example 1.

### Example 8

This example differs from Example 1 in that:
This example provides a method for manufacturing an SPC flooring with 3D wood texture. In step (S.4), using a corona treatment machine to apply high-frequency high-voltage electricity with a discharge rate of 22 m/min to the surface of the sanded PVC white film in step (S.3) for corona discharge. The rest is the same as in Example 1.

### Example 9

This example differs from Example 1 in that:
This example provides a method for manufacturing an SPC flooring with 3D wood texture. In step (S.4), using a corona treatment machine to apply high-frequency high-voltage electricity for corona discharge on the surface of the sanded PVC white film in step (S.3), with the distance between the PVC white film surface and the discharge electrode applying high-frequency high voltage being 2 cm. The rest is the same as in Example 1.

### Example 10

This example differs from Example 1 in that:
This example provides a method for manufacturing an SPC flooring with 3D wood texture. In step (S.4), using a corona treatment machine to apply high-frequency high-voltage electricity for corona discharge on the surface of the sanded PVC white film in step (S.3), with the distance between the PVC white film surface and the discharge electrode applying high-frequency high voltage being 5 cm. The rest is the same as in Example 1.

### Example 11

This example provides a method for manufacturing an SPC flooring with 3D wood texture, comprising the following steps:
(S.1) Adding the raw materials and additives constituting the SPC substrate to the main extruder, melting them by the main extruder, extruding into the main channel of the mold, and then extruding from the mold to form the SPC substrate layer;
(S.2) Unwinding a PVC white film (with a softening temperature of 70°C) with a thickness of 0.05 mm constituting the base color layer and online roller compositing it with the SPC substrate layer obtained in step (S.1), thereby obtaining an SPC substrate layer with the surface covered by the PVC white film;
(S.3) Using a belt sander (sand belt mesh size of 240 mesh) to sand the surface of the PVC white film, making the surface roughness Ra value of the sanded PVC white film 0.6 µm;
(S.4) Using a corona treatment machine to apply high-frequency high-voltage electricity with a current of 6 A, discharge rate of 30 m/min, and distance between the PVC white film surface and the discharge electrode applying high-frequency high voltage of 4 cm to the surface of the sanded PVC white film in step (S.3) for corona discharge, making the surface tension of the PVC white film after corona treatment 38 mN/m;
(S.5) Coating primer on the surface of the corona-treated PVC white film obtained in step (S.4), with the primer amount of 10 g/m², then irradiating with 160 w/cm ultraviolet light generated by a medium-pressure Hg lamp to cure the primer and obtain the primer layer;
(S.6) Sequentially coating color paint, ink for forming the pattern layer, paint or coating for forming the three-dimensional wood texture layer, and topcoat for protecting the three-dimensional wood texture layer from bottom to top on the surface of the primer layer obtained in step (S.5), thereby sequentially forming the color paint layer, pattern layer, three-dimensional wood texture layer, and topcoat layer. Wherein, the amount of color paint is 15 g/m², then irradiated with 160 w/cm ultraviolet light generated by a medium-pressure Hg lamp, the amount of ink for forming the pattern layer is 6 g/m², the amount of paint for forming the three-dimensional wood texture layer is 100 g/m², and the amount of topcoat is 10 g/m².

This example also provides an SPC flooring with 3D wood texture prepared by the method as described above.

### Example 12

This example provides a method for manufacturing an SPC flooring with 3D wood texture, comprising the following steps:
(S.1) Adding the raw materials and additives constituting the SPC substrate to the main extruder, melting them by the main extruder, extruding into the main channel of the mold, and then extruding from the mold to form the SPC substrate layer;
(S.2) Unwinding a PVC white film (with a softening temperature of 85°C) with a thickness of 0.15 mm constituting the base color layer and online roller compositing it with the SPC substrate layer obtained in step (S.1), thereby obtaining an SPC substrate layer with the surface covered by the PVC white film;
(S.3) Using a belt sander (sand belt mesh size of 240 mesh) to sand the surface of the PVC white film, making the surface roughness Ra value of the sanded PVC white film 0.6 µm;
(S.4) Using a corona treatment machine to apply high-frequency high-voltage electricity with a current of 6 A, discharge rate of 30 m/min, and distance between the PVC white film surface and the discharge electrode applying high-frequency high voltage of 4 cm to the surface of the sanded PVC white film in step (S.3) for corona discharge, making the surface tension of the PVC white film after corona treatment 38 mN/m;
(S.5) Coating primer on the surface of the corona-treated PVC white film obtained in step (S.4), with the primer amount of 15 g/m², then irradiating with 160 w/cm ultraviolet light generated by a medium-pressure Hg lamp to cure the primer and obtain the primer layer;
(S.6) Sequentially coating color paint, ink for forming the pattern layer, paint or coating for forming the three-dimensional wood texture layer, and topcoat for protecting the three-dimensional wood texture layer from bottom to top on the surface of the primer layer obtained in step (S.5), thereby sequentially forming the color paint layer, pattern layer, three-dimensional wood texture layer, and topcoat layer. Wherein, the amount of color paint is 25 g/m², then irradiated with 160 w/cm ultraviolet light generated by a medium-pressure Hg lamp, the amount of ink for forming the pattern layer is 10 g/m², the amount of paint or coating for forming the three-dimensional wood texture layer is 220 g/m², and the amount of topcoat is 15 g/m².

This example also provides an SPC flooring with 3D wood texture prepared by the method as described above.

### Example 13

This example differs from Example 1 in that:
This example provides a method for manufacturing an SPC flooring with 3D wood texture. In step (S.2), the PVC raw materials and additives constituting the base color layer are added to the auxiliary extruder, melted by the auxiliary extruder, and extruded into the auxiliary channel of the mold, then diffused in the co-extrusion casting space of the mold to cover the SPC substrate layer, and after heat exchange by the cooling channel plate in the mold, solidified and shaped, finally extruded from the mold to obtain an SPC substrate layer with the surface covered by the base color film. The rest is the same as in Example 1.

### Example 14

This example differs from Example 1 in that:
This example provides a method for manufacturing an SPC flooring with 3D wood texture. In step (S.2), after the SPC substrate is extruded, its surface is coated with one or more layers of white paint to obtain an SPC substrate layer with the surface covered by white paint. The rest is the same as in Example 1.

### Example 15

This example differs from Example 1 in that:
This example provides a method for manufacturing an SPC flooring with 3D wood texture. In step (S.3), using flexible wiping tools such as soft cloth or soft brush dipped in organic solvents such as acetone to wipe the surface of the PVC white film, making the surface roughness Ra value of the wiped PVC white film 0.6 µm. The rest is the same as in Example 1.

### Example 16

This example differs from Example 1 in that:
This example provides a method for manufacturing an SPC flooring with 3D wood texture. In step (S.4), using a 400 W carbon dioxide laser to apply a laser beam to the surface of the sanded PVC white film in step (S.3) for thermal treatment. The rest is the same as in Example 1.

### Comparative Example 1

This example differs from Example 1 in that:
This example provides a method for manufacturing an SPC flooring with 3D wood texture. In step (S.3), the sand belt mesh size is 100 mesh, making the surface roughness Ra value of the sanded PVC white film 3.2 µm. The rest is the same as in Example 1.

### Comparative Example 2

This example differs from Example 1 in that:
This example provides a method for manufacturing an SPC flooring with 3D wood texture. In step (S.3), the sand belt mesh size is 400 mesh, making the surface roughness Ra value of the sanded PVC white film 0.1 µm. The rest is the same as in Example 1.

### Comparative Example 3

This example differs from Example 1 in that:
This example provides a method for manufacturing an SPC flooring with 3D wood texture. In step (S.4), using a corona treatment machine to apply high-frequency high-voltage electricity with a current of 2 A to the surface of the sanded PVC white film in step (S.3) for corona discharge, making the surface tension of the PVC white film after corona treatment 34 mN/m. The rest is the same as in Example 1.

### Comparative Example 4

This example differs from Example 1 in that:
This example provides a method for manufacturing an SPC flooring with 3D wood texture. In step (S.4), using a corona treatment machine to apply high-frequency high-voltage electricity with a current of 10 A to the surface of the sanded PVC white film in step (S.3) for corona discharge, making the surface tension of the PVC white film after corona treatment 42 mN/m. The rest is the same as in Example 1.

### [Performance Testing]

### [Warping Degree Testing]

SPC flooring panels with 3D wood texture were batch-produced according to the methods in Examples 1~16 and Comparative Examples 1~4, respectively, with 50 panels each, then cut into 240 mm × 240 mm panel samples, and the initial warping degree and heating warping degree of the panels were measured. The testing process is as follows: Place the panel samples with the three-dimensional wood texture layer facing up on an aluminum plate, place in conditions of 23±2°C and 50±5% RH for 24 h, and measure the average initial warping degree of the panel samples using a caliper; Adjust the temperature in the constant temperature drying oven to 80°C, place the panel samples together with the aluminum plate in the constant temperature drying oven for 6 h, then take out the panel samples together with the aluminum plate, place in conditions of 23±2°C and 50±5% RH for 24 h, and measure the average heating warping degree of the panel samples using a caliper. The test results are shown in Table 1 below.

**Table 1**

| Group | Warping Test | |
|---|---|---|
| | Average Initial Warping Degree/(mm/m) | Average Heating Warping Degree/(mm/m) |
| Example 1 | 0.25 | 0.43 |
| Example 2 | 0.55 | 0.85 |
| Example 3 | 0.53 | 0.83 |
| Example 4 | 0.51 | 0.81 |
| Example 5 | 0.48 | 0.68 |
| Example 6 | 0.45 | 0.65 |
| Example 7 | 0.49 | 0.71 |
| Example 8 | 0.48 | 0.69 |
| Example 9 | 0.54 | 0.75 |
| Example 10 | 0.48 | 0.71 |
| Example 11 | 0.58 | 0.86 |
| Example 12 | 0.57 | 0.87 |
| Example 13 | 0.45 | 0.76 |
| Example 14 | 0.48 | 0.79 |
| Example 15 | 0.47 | 0.75 |
| Example 16 | 0.63 | 0.71 |
| Comparative Example 1 | 0.46 | 0.89 |
| Comparative Example 2 | 0.38 | 0.75 |
| Comparative Example 3 | 0.53 | 0.8 |
| Comparative Example 4 | 0.49 | 0.76 |

### [Soaking Peeling Degree Testing]

SPC flooring panels with 3D wood texture were prepared according to the methods in Examples 1~16 and Comparative Examples 1~4. According to the relevant contents of GB/T17657-2013 "Test Methods for Physical and Chemical Properties of Man-Made Boards and Surface-Covered Man-Made Boards", the panels were tested for soaking peeling degree. The soaking peeling degree test method is: Cut 75 mm long and 75 mm wide products from the panels as test samples. Place the test samples in boiling water at 100°C for 4 h soaking, take out and place in a drying oven at 63°C for 20 h drying, then place the test samples in boiling water at 100°C for 4 h soaking, take out and place in a drying oven at 63°C for 3 h drying. During soaking, the test samples should be fully immersed in boiling water. Carefully observe whether there is peeling and delamination between each paint layer and the SPC substrate layer of the test samples. Use a steel ruler to measure the length of the peeling or delamination parts on each side of each paint layer of the test samples. If the peeling or delamination on one side is divided into several segments, they should be accumulated and added. The test results are shown in Table 2 below.

**Table 2**

| Group | Length of Peeling or Delamination of Each Side of Each Coating Layer of Sample (mm) |
|---|---|
| Example 1 | 3.5 |
| Example 2 | 7.5 |
| Example 3 | 7.0 |
| Example 4 | 6.5 |
| Example 5 | 6.0 |
| Example 6 | 5.5 |
| Example 7 | 6.4 |
| Example 8 | 6.3 |
| Example 9 | 7.1 |
| Example 10 | 6.2 |
| Example 11 | 7.6 |
| Example 12 | 7.5 |
| Example 13 | 5.6 |
| Example 14 | 5.8 |
| Example 15 | 5.7 |
| Example 16 | 7.8 |
| Comparative Example 1 | 8.2 |
| Comparative Example 2 | 7.6 |
| Comparative Example 3 | 7.9 |
| Comparative Example 4 | 7.8 |

From the data analysis in Table 1 and Table 2, it can be seen that using a belt sander (sand belt mesh size of 240 mesh) to sand the surface of the PVC white film, making the surface roughness Ra value of the sanded PVC white film 0.6 µm. Then using a corona treatment machine to apply high-frequency high-voltage electricity with a current of 6 A, discharge rate of 30 m/min, and distance between the PVC white film surface and the discharge electrode applying high-frequency high voltage of 4 cm to the surface of the sanded PVC white film for corona discharge, making the surface tension of the PVC white film after corona treatment 38 mN/m, the adhesion performance of the PVC white film surface is significantly improved, and the length of the peeling or delamination parts on each side of each paint layer of the prepared SPC flooring with 3D wood texture is the shortest at 3.5 mm, indicating that after sanding and corona treatment, the adhesion between the PVC white film and the SPC substrate layer as well as the three-dimensional wood texture layer above the SPC substrate layer is enhanced, the bonding is more stable, effectively reducing the warping degree of the three-dimensional wood texture layer.

The above is only a detailed description of the preferred embodiments and principles of the present invention. For those of ordinary skill in the art, based on the ideas provided by the present invention, there will be changes in the specific implementation, and these changes should also be regarded as the protection scope of the present invention.

## Claims

1. A method for manufacturing stone-plastic composite (SPC) flooring with 3D wood grain texture, **characterized in that** it comprises at least the following steps:
(S.1) Extruding to form an SPC flooring substrate;
(S.2) Covering the surface of the SPC flooring substrate with a base color layer;
(S.3) Imparting irregularly distributed pores on the surface of the base color layer;
(S.4) Subjecting the surface of the base color layer obtained in the previous step to high-energy beam stimulation;
(S.5) Coating at least a portion of the surface of the base color layer obtained in the previous step with a primer and curing it to form a primer layer;
(S.6) Sequentially forming, from bottom to top, a color paint layer, a pattern layer, a three-dimensional wood grain layer, and a topcoat layer on at least a portion of the surface of the primer layer.

2. The method for manufacturing SPC flooring with 3D wood grain texture according to claim 1, **characterized in that** the process of forming the base color layer in step (S.2) comprises:
Covering the surface of the SPC flooring substrate with a base color film.

3. The method for manufacturing SPC flooring with 3D wood grain texture according to claim 1 or 2, **characterized in that** the base color layer comprises at least one or a combination of polyvinyl chloride resin, colorant, plasticizer, heat stabilizer, and lubricant.

4. The method for manufacturing SPC flooring with 3D wood grain texture according to claim 1 or 2, **characterized in that** the base color layer is white and has a thickness of 0.05 to 0.15 mm.

5. The method for manufacturing SPC flooring with 3D wood grain texture according to claim 1, **characterized in that** the process of imparting irregularly distributed pores on the surface of the base color layer in step (S.3) comprises:
Polishing the surface of the base color layer by contacting it with an abrasive tool.

6. The method for manufacturing SPC flooring with 3D wood grain texture according to claim 5, **characterized in that** the surface roughness Ra of the base color layer after contact with the abrasive tool is 0.3 to 1.6 µm.

7. The method for manufacturing SPC flooring with 3D wood grain texture according to claim 5, **characterized in that** the abrasive tool is any one of a belt sander, a belt grinding machine, or a belt polishing machine.

8. The method for manufacturing SPC flooring with 3D wood grain texture according to claim 5 or 6, **characterized in that** the abrasive tool comprises one or a combination of a sanding belt, sandpaper, or gauze.

9. The method for manufacturing SPC flooring with 3D wood grain texture according to claim 1, **characterized in that** the process of subjecting the surface of the base color layer to high-energy beam stimulation in step (S.4) comprises:
Subjecting the surface of the base color layer to high-frequency, high-voltage corona discharge.

10. The method for manufacturing SPC flooring with 3D wood grain texture according to claim 9, **characterized in that** the current intensity of the high-frequency, high-voltage corona discharge is 4 to 8 A.

11. The method for manufacturing SPC flooring with 3D wood grain texture according to claim 1 or 9, **characterized in that** the surface tension of the base color layer surface after high-energy beam stimulation is 36 to 40 mN/m.

12. The method for manufacturing SPC flooring with 3D wood grain texture according to claim 1 or 9, **characterized in that** the rate of subjecting the surface of the base color layer to high-frequency, high-voltage corona discharge is 15 to 30 m/min.

13. The method for manufacturing SPC flooring with 3D wood grain texture according to claim 9 or 10, **characterized in that** the distance between the surface of the base color layer and the discharge electrode applying the high-frequency, high-voltage electricity is 2 to 5 cm.

14. The method for manufacturing SPC flooring with 3D wood grain texture according to claim 1, **characterized in that** the primer in step (S.5) comprises at least a photocrosslinkable resin and a photoinitiator.

15. The method for manufacturing SPC flooring with 3D wood grain texture according to claim 14, **characterized in that** the photocrosslinkable resin comprises one or a combination of unsaturated polyester, epoxy resin, acrylic resin, acrylic-modified polyurethane resin, acrylic-modified silicone resin, acrylic-modified epoxy resin, water-based epoxy acrylate, water-based polyurethane acrylate, or water-based polyester acrylate.

16. The method for manufacturing SPC flooring with 3D wood grain texture according to claim 14, **characterized in that** the photoinitiator comprises any one of a free radical polymerization initiator, a cationic polymerization initiator, an energy transfer initiator, or an ionic reaction initiator.

17. The method for manufacturing SPC flooring with 3D wood grain texture according to claim 1 or 14, **characterized in that** the amount of primer applied to the surface of the base color layer in step (S.5) is 10 to 15 g/m².

18. The method for manufacturing SPC flooring with 3D wood grain texture according to claim 1, **characterized in that** the color paint layer in step (S.6) is white, and the amount of color paint used for the color paint layer is 15 to 25 g/m².

19. The method for manufacturing SPC flooring with 3D wood grain texture according to claim 1, **characterized in that** the process of forming the pattern layer in step (S.6) comprises:
Coating at least a portion of the surface of the color paint layer with ink to form a wood grain pattern and curing it to obtain the pattern layer.

20. The method for manufacturing SPC flooring with 3D wood grain texture according to claim 1 or 19, **characterized in that** the amount of ink used for the pattern layer in step (S.6) is 6 to 10 g/m².

21. The method for manufacturing SPC flooring with 3D wood grain texture according to claim 1, **characterized in that** the process of forming the three-dimensional wood grain layer in step (S.6) comprises:
Covering at least a portion of the surface of the pattern layer with a three-dimensional wood grain layer having a three-dimensional structure.

22. The method for manufacturing SPC flooring with 3D wood grain texture according to claim 1, **characterized in that** the process of forming the topcoat layer in step (S.6) comprises:
Coating at least a portion of the surface of the three-dimensional wood grain layer with a topcoat and curing it to obtain the topcoat layer.

23. The method for manufacturing SPC flooring with 3D wood grain texture according to claim 1 or 22, **characterized in that** the amount of topcoat used for the topcoat layer in step (S.6) is 10 to 15 g/m².

24. An SPC flooring with 3D wood grain texture prepared by the method according to any one of claims 1 to 23.
